# EUROPÄISCHE PATENTSCHRIFT

(11) **EP 1 614 553 B1**
(45) Veröffentlichungstag und Bekanntmachung des Hinweises auf die Patenterteilung: **12.09.2007**
(21) Anmeldenummer: 05014326.2
(22) Anmeldetag: 01.07.2005
(51) Int. Cl.: B60C 27/06

(54) **Durchziehöse für die Spannkette einer Gleitschutzkette**
Eyelet for the through-passing of a tensioning chain of an anti-skid device
Anneau pour passer un brin de chaîne utilisé pour tendre un système antidérapant

(30) Priorität: 05.07.2004 DE 202004010577 U
(43) Veröffentlichungstag der Anmeldung: 11.01.2006
(73) Patentinhaber: RuD Ketten Rieger & Dietz GmbH u. Co. KG, 73432 Aalen (DE)
(72) Erfinder:
(74) Vertreter: Böning, Manfred

(56) Entgegenhaltungen:
- EP-A- 0 263 778
- DE-A1- 2 651 162
- DE-U1- 20 102 055
- US-A- 4 390 053

## Beschreibung

Die Erfindung betrifft eine Durchziehöse für die Spannkette einer Gleitschutzkette mit einem zu ihrer Befestigung an einer Seitenkette der Gleitschutzkette dienenden Anschlussteil, der zwei einen Einführspalt für ein Glied der Seitenkette begrenzende, hakenförmige Anschlussarme für die Schenkel dieses Gliedes aufweist.

Bekannt sind Durchziehösen der vorstehenden Art, die aus einem offenen, im Wesentlichen U-förmigen Bügel bestehen, d. h. die zwei über ein Joch miteinander verbundene, vergleichsweise lange Schenkel aufweisen, wobei die Schenkelenden zwecks Bildung von Anschlusshaken nach innen umgebogen sind.

Eine gattungsgemäße Durchziehöse ist aus der EP 0263778 bekannt.

Der Erfindung liegt die Aufgabe zugrunde, eine Durchziehöse zu schaffen, die sich durch eine hohe Bruchfestigkeit und gute Führungseigenschaften auszeichnet. Gelöst wird diese Aufgabe erfindungsgemäß durch eine Durchziehöse, die einen geschlossenen, durch einen Stabilisierungssteg vom Anschlussteil getrennten Führungskanal für die Spannkette aufweist.

Durch den Stabilisierungssteg wird nicht nur eine gegenüber den bekannten Durchziehösen erhöhte Festigkeit, sondern auch eine klare Trennung zwischen den Gliedern der Seitenkette und der Spannkette erreicht. Diese Trennung wirkt sich nicht nur bei der Montage und Demontage der Gleitschutzkette, sondern auch bei deren Aufbewahrung positiv aus.

Als besonders vorteilhaft erweist es sich, wenn der Abstand zwischen den Außenflächen der Durchziehöse im Bereich des Stabilisierungssteges größer als im Bereich des Bodens ihres Führungskanales und der Enden der Anschlussarme ist, so dass sich die Seitenwände der Durchziehöse vom Stabilisierungssteg ausgehend gewissermaßen trapezförmig nach oben und unten aufeinander zu bewegen. Auf diese Art und Weise wird erreicht, dass sich der den Führungskanal aufweisende Teil der Durchziehöse im montierten Zustand der Gleitschutzkette unter der Einwirkung der Seitenkette leicht vom Fahrzeugrad weg nach außen bewegt und beim Betätigen der Spannkette der Kontakt zwischen der Flanke des Reifens bzw. der Felge des Rades und der Spannkette aufgehoben wird.

Weitere Merkmale und Einzelheiten der erfindungsgemäßen Durchziehöse ergeben sich aus den Unteransprüchen und der nachstehenden Beschreibung einer in den beigefügten Zeichnungen dargestellten bevorzugten Ausführungsform der Erfindung.
Es zeigen:
- Fig. 1: die perspektivische Ansicht einer Durchziehöse mit Gliedern der Seiten- und Spannkette einer Gleitschutzkette,
- Fig. 2: die Vorderansicht der Durchziehöse gemäß Fig. 1 und
- Fig. 3: die Stimansicht der Durchziehöse mit dem Querschnitt eines in die hakenförmigen Anschlussarme der Öse eingehängten Seitenkettengliedes.

In den Figuren sind 1 und 2 zwei hakenförmige, kurze und mithin steife Anschlussarme für ein Kettenglied 3 der Seitenkette 4 einer nicht dargestellten Gleitschutzkette. Die in Fig. 3 nach unten gerichteten Abschnitte der Hakenzinken begrenzen einen, den schnellen und bequemen Anschluss der Durchziehöse an die Seitenkette 4 ermöglichenden Einführspalt 5 für das Kettenglied 3 und sind an ihren freien Enden mit Rastnocken 6, 7 versehen, die den sicheren Sitz der Längsschenkel des Kettengliedes 3 in den Hakenzinken unterstützen.

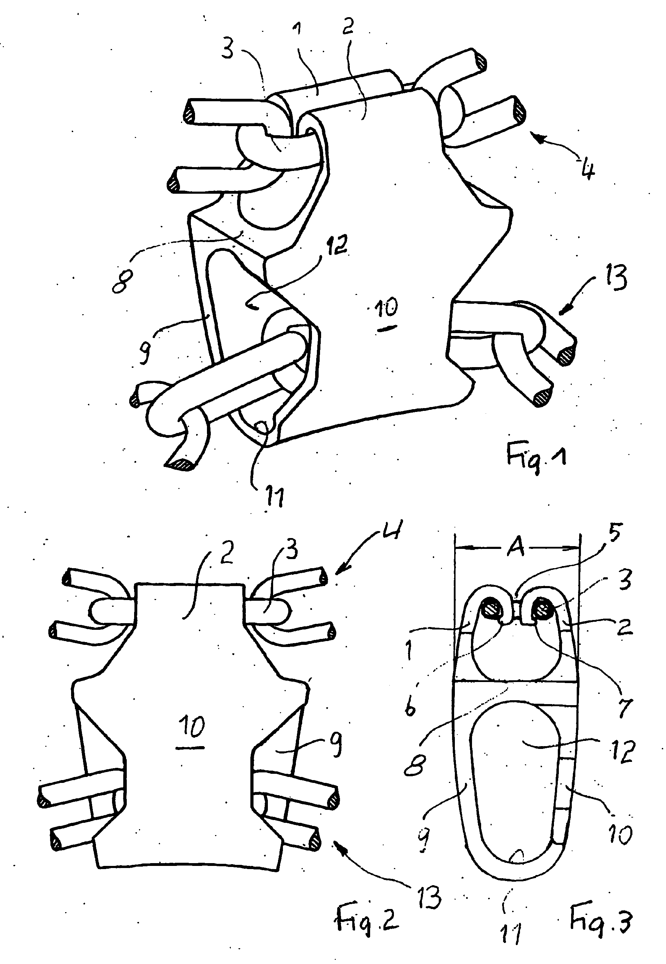

Die unteren Enden der Anschlussarme 1, 2 gehen in einen Stabilisierungssteg 8 über, der zusammen mit zwei Wänden 9, 10 und einem rinnenförmigen Boden 11 einen Führungskanal 12 für eine Spannkette 13 begrenzt, von der nur einige wenige Glieder in den Figuren 1 und 2 dargestellt sind. Der die hakenförmigen Anschlussarme 1, 2 aufweisende Anschlussteil der Durchziehöse ist mit anderen Worten durch den Stabilisierungssteg 8 vom Führungskanal 12 getrennt.

Wie insbesondere der Fig. 3 entnommen werden kann, ist der Abstand A zwischen den Außenseiten der Durchziehöse im Bereich des Stabilisierungssteges 8 am größten, so dass die Öse wippenartige Kippbewegungen ausführen kann. In der Praxis ragt das untere Ende der Durchziehöse häufig bis in den Bereich der Felge des Fahrzeugreifens. Dies bedeutet, dass dann, wenn sich der von den Anschlussarmen 1, 2 gebildete Anschlussteil unter der Einwirkung der Seitenkette 4 gegen die Flanke des Fahrzeugreifens anlegt, eine Abspreizbewegung des unteren Teiles der Durchziehöse von der Felge stattfindet. Die Durchziehöse erfüllt folglich eine Doppelfunktion, indem sie zusätzlich eine Art Felgenschutzöse bildet. Es ist dies ein Umstand, der sich insbesondere beim Einsatz von Alufelgen positiv auswirkt. Der Erfüllung der Zusatzfunktion kommt es entgegen, dass mindestens die im montierten Zustand der Gleitschutzkette dem Fahrzeugreifen zugewandte Wand 9 des Führungskanales 12 breiter ist als die Anschlussarme 1, 2. Im übrigen ist nicht nur die Breite der Wand 9, sondern zur Erzielung einer einwandfreien, d. h. einem Verhaken der Spannkette 13 an den Stimseiten der Öse entgegenwirkenden Führung auch die Länge des Bodens 11 des Führungskanales 12 größer als die Teilung der Glieder der Spannkette. Um die Durchziehöse wirtschaftlich fertigen zu können, ist sie als Kunststoff-Spritzgussteil ausgebildet.

## Patentansprüche

1. Durchziehöse für die Spannkette (13) einer Gleitschutzkette mit einem zu ihrer Befestigung an einer Seitenkette (4) der Gleitschutzkette dienenden Anschlussteil, der zwei einen Einführspalt (5) für ein Glied (3) der Seitenkette (4) begrenzende, hakenförmige Anschlussarme (1, 2) für die Schenkel dieses Gliedes (3) aufweist, **dadurch gekennzeichnet, dass** sie einen Stabilisierungssteg (8) aufweist, durch den der lediglich das Glied (3) der Seitenkette (4) aufnehmende Anschlussteil von einem Führungskanal (12) für die Spannkette (13) getrennt ist.

2. Durchziehöse nach Anspruch 1, **dadurch gekennzeichnet, dass** der Abstand (A) zwischen den Außenseiten der Durchziehöse im Bereich des Stabilisierungssteges (8) größer als im Bereich des Bodens (11) ihres Führungskanales (12) und der Enden der Anschlussarme (1, 2) ist.

3. Durchziehöse nach Anspruch 1 oder 2, **dadurch gekennzeichnet, dass** die Erstreckung des Bodens (11) des Führungskanales (12) in Durchziehrichtung größer als die Teilung der Glieder der Spannkette (13) ist.

4. Durchziehöse nach einem der Ansprüche 1 bis 3, **dadurch gekennzeichnet, dass** die Breite mindestens der im montierten Zustand der Gleitschutzkette dem Reifen zugewandten Wand (9) der Durchziehöse größer als die Breite der Anschlussarme (1, 2) ist.

5. Durchziehöse nach einem der Ansprüche 1 bis 4, **dadurch gekennzeichnet, dass** die Breite der im montierten Zustand der Gleitschutzkette dem Reifen zugewandten Wand (9) des Führungskanales (12) der Durchziehöse überall größer als die Teilung der Glieder der Spannkette (13) der Gleitschutzkette ist.

6. Durchziehöse nach einem der Ansprüche 1 bis 5, **dadurch gekennzeichnet, dass** sie als Kunststoff-Spritzgussteil ausgebildet ist.

## Claims

1. Pull-through loop for the tension chain (13) of an anti-skid chain having a connection part serving for attachment thereof to a side chain (4) of the anti-skid chain, and which has two hook-like connections arms (1, 2), which limit the introduction gap (5) for a member (3) of the side chain (4), for the limbs of this member (3), **characterised in that** it has a stabilisation bar (8), by means of which the connection part receiving only the member (3) of the side chain (4) is separated from a guide channel (12) for the tension chain (13).

2. Pull-through loop according to claim 1, **characterised in that** the distance (A) between the outer sides of the pull-through loop in the region of the stabilisation bar (8) is greater than in the region of the base (11) of its guide channel (12) and of the ends of the connection arms (1, 2).

3. Pull-through loop according to claim 1 or 2, **characterised in that** the extension of the base (11) of the guide channel (12) in pull-through direction is greater than the spacing of the members of the tension chain (13).

4. Pull-through loop according to one of claims 1 to 3, **characterised in that** the width at least of the wall (9) of the pull-through loop facing the tyre in the assembled state of the anti-skid chain is greater than the width of the connection arms (1, 2).

5. Pull-through loop according to one of claims 1 to 4, **characterised in that** the width of the wall (9) of the guide channel (12) of the pull-through loop facing the tyre in the assembled state of the anti-skid chain is greater everywhere than the spacing of the members of the tension chain (13) of the anti-skid chain.

6. Pull-through loop according to one of claims 1 to 5, **characterised in that** it is designed as a plastic injection-moulded part.

## Revendications

1. Anneau de passage pour la chaîne tendeuse (13) d'une chaîne antidérapage, comprenant une partie d'attache servant à le fixer sur une chaîne latérale (4) de la chaîne antidérapage, cette partie comprenant deux bras d'attache (1, 2) en forme de crochets délimitant une fente d'insertion (5) pour un maillon (3) de la chaîne latérale (4), prévus pour les branches de ce maillon (3),
**caractérisé en ce qu'**il comprend une âme stabilisatrice (8) grâce à laquelle la partie d'attache recevant uniquement le maillon (3) de la chaîne latérale (4) est séparée du canal de guidage (12) de la chaîne tendeuse (13).

2. Anneau de passage selon la revendication 1, **caractérisé en ce que** la distance (A) entre les côtés extérieurs de l'anneau de passage est plus grande au niveau de l'âme stabilisatrice (8) qu'au niveau du fond (11) de son canal de guidage (12) et au niveau des extrémités des bras d'attache (1, 2).

3. Anneau de passage selon la revendication 1 ou 2, **caractérisé en ce que** l'étendue du fond (11) du canal de guidage (12) dans le sens du passage est plus grande que le pas des maillons de la chaîne tendeuse (13).

4. Anneau de passage selon l'une des revendications 1 à 3, **caractérisé en ce que** la largeur au moins de la paroi (9) de l'anneau de passage qui, à l'état monté de la chaîne antidérapage, est tournée vers le pneu, est supérieure à la largeur des bras d'attache (1, 2).

5. Anneau de passage selon l'une des revendications 1 à 4, **caractérisé en ce que** la largeur de la paroi (9) du canal de guidage (12) de l'anneau de passage qui, à l'état monté de la chaîne antidérapage, est tournée vers le pneu, est en tous points supérieure au pas des maillons de la chaîne tendeuse (13) de la chaîne antidérapage.

6. Anneau de passage selon l'une des revendications 1 à 5, **caractérisé en ce qu'**il est réalisé sous forme d'une pièce en matière plastique moulée par injection.
